# EUROPEAN PATENT APPLICATION

(11) **EP 2 781 931 A2**
(43) Date of publication of application: **24.09.2014**
(21) Application number: 14151047.9
(22) Date of filing: 14.01.2014
(51) Int. Cl.: G01S 17/02

(54) **Limited reflection type photoelectric sensor**

(30) Priority: 19.03.2013 JP 2013057188
(71) Applicant: OMRON CORPORATION, Kyoto-shi, Kyoto 600-8530 (JP)
(72) Inventor: Taishi, Yohitaka, Kyoto-shi, Kyoto 600-8530 (JP); Hosokawa, Hayami, Kyoto-shi, Kyoto 600-8530 (JP); Tanaka, Masayuki, Kyoto-shi, Kyoto 600-8530 (JP); Murota, Masayuki, Kyoto-shi, Kyoto 600-8530 (JP)
(74) Representative: Kilian Kilian & Partner

(57) **Abstract**

To provide a limited reflection type photoelectric sensor capable of extending a detection range so as to allow detection of an object, a distance from which to the surface to be measured varies, with accuracy in a simple configuration. The limited reflection type photoelectric sensor includes a light projecting unit having a laser diode and a light receiving unit having a photodiode. In the light projecting unit and the light receiving unit, an intersecting angle between an optical axis of a projected light beam and an optical axis of a receiving light beam is set such that the projected light beam from the light projecting unit is directed to an object detection limited area and the receiving light beam which is reflected light from an object existing in the object detection limited area is received by the light receiving unit. Presence/absence of the object is determined based on a light receiving level of the photodiode. A diffracting grating configured to a projected light beam into beams oriented in a plurality of directions is provided in an optical path of the projected light beam from the laser diode.

## Description

### BACKGROUND OF THE INVENTION

### 1. TECHNICAL FIELD

The present invention relates to a limited reflection type photoelectric sensor having a limited object detection area.

### 2. RELATED ART

Conventionally, as a photoelectric sensor for detecting whether or not an object exists at a predetermined position, there is known a limited reflection type photoelectric sensor having a limited object detection area.

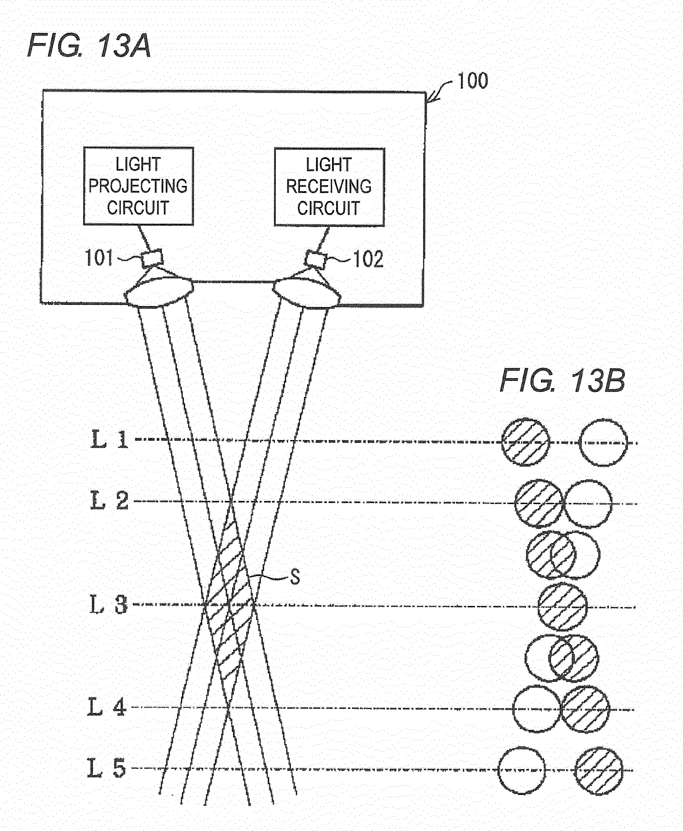

As illustrated in Figs. 13A and 13B, a limited reflection type photoelectric sensor 100 includes a light emitting element 101 and a light receiving element 102. Optical axes of the respective light emitting element 101 and light receiving element 102 are set such that a projected light beam from the light emitting element 101 is directed to an object detection limited area S and reflected light of an object intersecting with the projected light beam only in the object detection limited area S is received by the light receiving element 102. Thus, when the object passes through the hatched object detection limited area S, the light receiving element 102 detects the reflected light from the object and identifies the object.

In more detail, in the limited reflection type photoelectric sensor 100, when the object exists in the object detection limited area S which is away from the limited reflection type photoelectric sensor 100 by a distance of L2 to L4, the projected light beam from the light emitting element 101 is regularly reflected by the object, and a receiving light beam thus regularly reflected enters the light receiving element 102. However, when the object exists outside the object detection limited area S of the distance of L2 to L4, it is determined that the object does not exist. That is, in this case, a range of the distance L2 to L4 from the limited reflection type photoelectric sensor 100 is an object detection range. As described above, in the limited reflection type photoelectric sensor 100, when the object enters the object detection limited area S of the distance L2 to L4, a signal corresponding to the object can be acquired by the light receiving element 102, and the limited reflection type photoelectric sensor 100 determines presence/absence of the object based on the signal.

When each of the projected light beam and the receiving light beam does not diverge, the limited reflection type photoelectric sensor 100 has a small difference, in terms of distance, between an operating level at which it detects the object and outputs a detection signal and non-operating level at which it assumes a non-detection state due to movement of the object and is less subject to background influence. Further, changing angles of the optical axes of the respective light emitting element 101 and light receiving element 102 allows setting of the detection distance.

Such a conventional limited reflection type photoelectric sensor 100 is used for, e.g., detecting an approaching object and stopping the object at a certain position. Thus, as illustrated in Figs. 13A and 13B, it is necessary to make sharp the projected light beam and receiving light beam at a position of the distance L4 which is far away from the limited reflection type photoelectric sensor 100.

However, there is a problem that the detection range cannot be extended in the conventional limited reflection type photoelectric sensor.

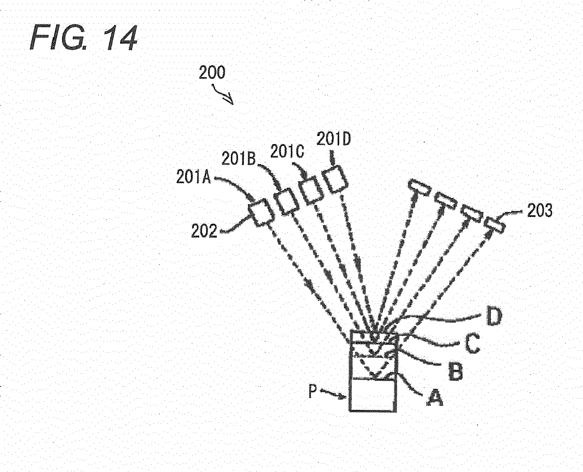

As a photoelectric sensor 200 that can extend the detection range, for example, Japanese Unexamined Patent Publication No. 06-241783 (published on September 2, 1994) discloses a technique, as illustrated in Fig. 14, in which a plurality of reflective type optical sensors 201A to 201 D for detecting surfaces A to D to be measured, respectively, at a detection position P are provided side by side, and each of the reflective type optical sensors 201A to 201 D detects the surfaces A to D to be measured, respectively. That is, the photoelectric sensor 200 has the reflective type optical sensors 201 A to 201 D each including a projector 202 and an optical receiver 203 so as to detect the surfaces A to D to be measured, respectively. This accordingly allows the detection range to be extended.

However, in the photoelectric sensor 200 disclosed in Japanese Unexamined Patent Publication No. 06-241783, the sensor needs to be provided according to the number of the surfaces to be measured, which disadvantageously leads to an increase in size of the device. Further, when the sensors are closely arranged to one another, adjacent sensors interfere with each other to easily cause malfunction.

### SUMMARY

The present invention has been made in view of the above conventional problems, and an object thereof is to provide a limited reflection type photoelectric sensor capable of extending the detection range so as to allow detection of an object, a distance from which to the surface to be measured varies, with accuracy in a simple configuration.

To solve the above problems, a limited reflection type photoelectric sensor according to an aspect of the present invention includes a light projecting unit having a light emitting element; a light receiving unit having a light receiving element; and a beam separating member configured to separate a projected light beam into beams oriented in a plurality of directions and located in an optical path of the projected light beam from the light emitting element, and the light projecting unit and the light receiving unit is configured to meet the condition that, an intersecting angle between an optical axis of a projected light beam and an optical axis of a receiving light beam is set such that the projected light beam from the light projecting unit is directed to an object detection limited area and the receiving light beam which is reflected light by an object existing in the object detection limited area is received by the light receiving unit, and presence/absence of the object is determined based on a light receiving level of the light receiving element.

According to the above configuration, the limited reflection type photoelectric sensor includes a light projecting unit having a light emitting element and a light receiving unit having a light receiving element, and in the light projecting unit and the light receiving unit, an intersecting angle between an optical axis of a projected light beam and an optical axis of a receiving light beam is set such that the projected light beam from the light projecting unit is directed to an object detection limited area and the receiving light beam which is reflected light from an object existing in the object detection limited area is received by the light receiving unit, and presence/absence of the object is determined based on a light receiving level of the light receiving element.

By the way, in the limited reflection type photoelectric sensor of this type, the projected light beam is a single light beam, so that the object detection limited area cannot be extended.

In order to cope with this problem, in the aspect of the present invention, a beam separating member configured to separate the projected light beam from the light projecting unit into beams oriented in a plurality of directions is provided in an optical path of the projected light beam form the light emitting element. The projected light beam is thus separated into beams oriented in a plurality of directions by the beam separating member, so that it is possible to generate a plurality of types of beams different in the intersecting angle between the optical axis of the projected light beam and the optical axis of the receiving light beam. This means that a plurality of object detection limited areas are generated in a direction opposite to the object, whereby a detection range is extended. This configuration can be achieved by simply adding the beam separating member.

Thus, by extending the detection range, it is possible to provide the limited reflection type photoelectric sensor capable of detecting the object, a distance from which to the surface to be measured varies, with accuracy, in a simple configuration.

In the limited reflection type photoelectric sensor according to the aspect of the present invention, the beam separating member is preferably a diffracting grating.

With the above configuration, when the diffracting grating is irradiated with the projected light beam, the zero-order light beam, ± first-order light beams, ··· are emitted from the diffracting grating. That is, the projected light beam is separated into beams oriented in a plurality of directions. The diffracting grating is easily commercially available.

Therefore, the beam separating member can be easily realized by the diffracting grating having a simple configuration with a low cost.

In the limited reflection type photoelectric sensor according to the aspect of the present invention, the light receiving unit may have a multiple beam receiving unit configured to receive a plurality of receiving light beams obtained as a result of reflection, by the object, of the projected light beams oriented in a plurality of directions, which are obtained as a result of beam separation by the beam separating member.

With this configuration, a plurality of light beams can be received by one multiple beam receiving unit, so that the number of components constituting the light receiving unit can be reduced.

In the limited reflection type photoelectric sensor according to the aspect of the present invention, the light receiving unit may have at least three single-beam receiving units configured to receive respective receiving light beams obtained as a result of reflection, by the object, of the projected light beams oriented in at least three directions, which are obtained as a result of beam separation by the beam separating member.

Thus, the limited reflection type photoelectric sensor can be used as a displacement sensor that detects a position of the object.

In the limited reflection type photoelectric sensor according to the aspect of the present invention, a convex lens configured to collect the projected light beam may be disposed between the light emitting element and the beam separating member.

That is, disposing the convex lens between the light emitting element and the beam separating member can make a light intensity distribution steep. This allows a threshold for determining presence/absence of the object to be easily set.

In the limited reflection type photoelectric sensor according to the aspect of the present invention, an intersecting angle varying mechanism that varies the intersecting angle between the optical axis of the projected light beam and the optical axis of the receiving light beam is preferably provided.

The use of the intersecting angle varying mechanism allows the intersecting angle between the optical axis of the projected light beam and the optical axis of the receiving light beam to be varied. As a result, the detection range can be extended, thereby allowing the object, a distance from which to the surface to be measured significantly varies to be detected with accuracy.

In the limited reflection type photoelectric sensor according to the aspect of the present invention, in order to allow a variation in the intersecting angle between the optical axis of the projected light beam and the optical axis of the receiving light beam, the intersecting angle varying mechanism may be realized as an inclination angle varying mechanism that varies the inclination angle of at least one of the light projecting unit and light receiving unit.

Accordingly, the inclination angle varying mechanism is used to vary the intersecting angle between the optical axis of the projected light beam and the optical axis of the receiving light beam. Specifically, the inclination angle of at least one of the light projecting unit and light receiving unit is varied. Thus, the intersecting angle can significantly be varied. This can facilitate adjustment of a distance of the object detection limited area relative to the limited reflection type photoelectric sensor.

In the limited reflection type photoelectric sensor according to the aspect of the present invention, the light receiving unit can receive the receiving light beam reflected by the object that regularly reflects the projected light beam incident thereto.

This allows detection of a specular object, so that it is possible not only to confirm the presence/absence of the object but also to grasp information concerning movement of the object.

In the limited reflection type photoelectric sensor according to the aspect of the present invention, there is preferably provided an inter-object distance calculating unit that calculates a distance from the object based on a magnitude of a light receiving level of the light emitting element.

That is, the use of the inter-object distance calculating unit allows the calculation of the distance between the limited reflection type photoelectric sensor and the object.

In the limited reflection type photoelectric sensor according to the aspect of the present invention, there is preferably provided an object travel direction detecting unit that detects whether the object approaches or recedes therefrom depending on whether the light receiving level of the light receiving element changes from high to low or low to high.

That is, the use of the object travel direction detecting unit allows the detection of whether the object approaches or recedes therefrom depending on whether the light receiving level of the light receiving element changes from high to low or low to high.

In the limited reflection type photoelectric sensor according to the aspect of the present invention, there is preferably provided a travel speed calculating unit that calculates an approaching speed or a receding speed of the object based on a temporal change in the light receiving level of the light receiving element.

That is, the use of the travel speed calculating unit allows calculation of the approaching speed or receding speed of the object based on a temporal change in the light receiving level of the light receiving element.

According to the aspect of the present invention, by extending the detection range, it is possible to provide the limited reflection type photoelectric sensor capable of detecting the object, a distance from which to the surface to be measured varies, with accuracy, in a simple configuration.

### BRIEF DESCRIPTION OF THE DRAWINGS

Figs. 1A, 1B, and 1C are cross-sectional views each illustrating a limited reflection type photoelectric sensor according to a first embodiment of the present invention and respectively illustrating object detection statuses in different object detection limited areas;
Fig. 2A is a view illustrating an object detection limited area set when an object is detected using the limited reflection type photoelectric sensor, and Fig. 2B is a view illustrating a waveform indicating a detection signal in the object detection limited area;
Fig. 3 is a perspective view illustrating a configuration of the limited reflection type photoelectric sensor;
Fig. 4 is a cross-sectional view illustrating a configuration of the limited reflection type photoelectric sensor;
Fig. 5 is a cross-sectional view illustrating the light receiving unit having one light receiving element;
Figs. 6A to 6C are cross-sectional views illustrating optical paths of the projected light beam and receiving light beam in a case where an object in different object detection limited areas is detected by one light receiving element;
Figs. 7A to 7C are cross-sectional views illustrating optical paths of the projected light beam and receiving light beam in a case where the light receiving unit has a plurality of light receiving elements;
Fig. 8 is a graph illustrating a distribution of a detection signal of the light receiving element in each of the following configurations: a collection type in which a convex lens is disposed in the optical path of the projected light beam; a parallel type in which the convex lens is not disposed in the optical path; a diffusion type in which a concave lens is disposed in the optical path; and the limited reflection type photoelectric sensor according to the present embodiment provided with the diffracting grating;

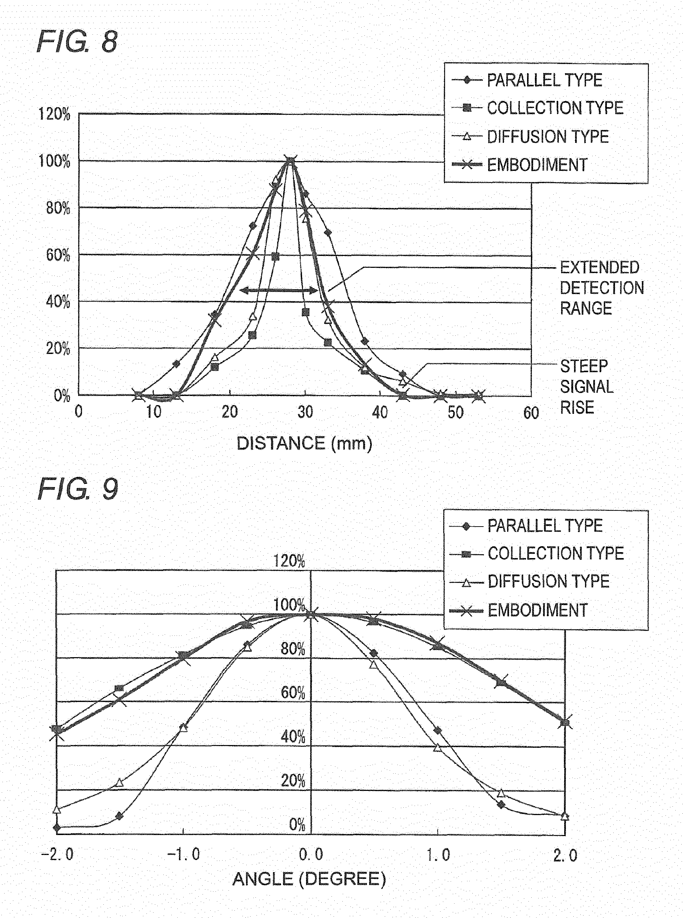

Fig. 9 is a graph illustrating an allowable range of an object detection position as an angular variation in a distribution of the detection signal of the light receiving element in each of the following configurations: a collection type in which a convex lens is disposed in the optical path of the projected light beam; a parallel type in which the convex lens is not disposed in the optical path; a diffusion type in which a concave lens is disposed in the optical path; and the limited reflection type photoelectric sensor according to the present embodiment provided with the diffracting grating;
Figs. 10A, 10B, and 10C are cross-sectional views each illustrating a limited reflection type photoelectric sensor according to a second embodiment of the present invention and respectively illustrating object detection statuses in different object detection limited areas;
Fig. 11 is a graph illustrating an output of the light receiving element of the limited reflection type photoelectric sensor according to the second embodiment obtained when detecting the object in each of different object detection limited areas;
Fig. 12 is a cross-sectional view describing a mechanism for calculating a travel speed of the object based on the output of the light receiving element of the limited reflection type photoelectric sensor according to the second embodiment obtained when detecting the object in each of different object detection limited areas;
Fig. 13A is a schematic view illustrating a configuration of a conventional limited reflection type photoelectric sensor, and Fig. 13B is a plan view illustrating a relationship between the projected light beam and the receiving light beam at positions different in distance from the limited reflection type photoelectric sensor; and
Fig. 14 is a schematic view illustrating a configuration of another conventional reflection type photoelectric sensor.

### DETAILED DESCRIPTION

### [First Embodiment]

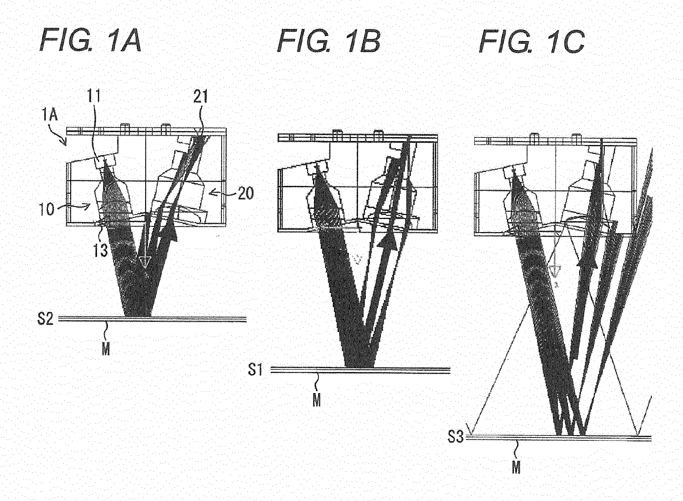

A first embodiment of the present invention will be described below with reference to Figs. 1 to 9.

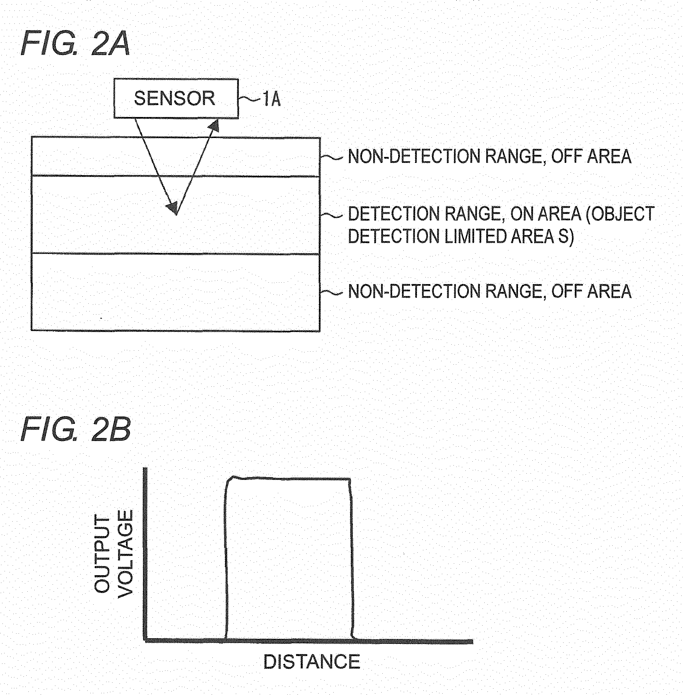

As illustrated in FIG. 2A, a limited reflection type photoelectric sensor according to the present embodiment is used for detection of presence/absence of an object in a limited range, such as detection of a level difference in an object or detection of presence/absence of a piece of paper. Thus, irrespective of whether reflected light from an object to be detected is regularly reflected light or diffusely reflected light, it is necessary to make a boundary of signal output clear within a range of a specified object detection limited area S, as illustrated in FIG. 2B. In this case, the range of the object detection limited area S is preferably as wide as possible.

That is, in the limited reflection type photoelectric sensor of this type, a projected light beam is a single light beam, so that the object detection limited area cannot be extended.

The limited reflection type photoelectric sensor of the present embodiment is improved to extend the object detection limited area S as much as possible.

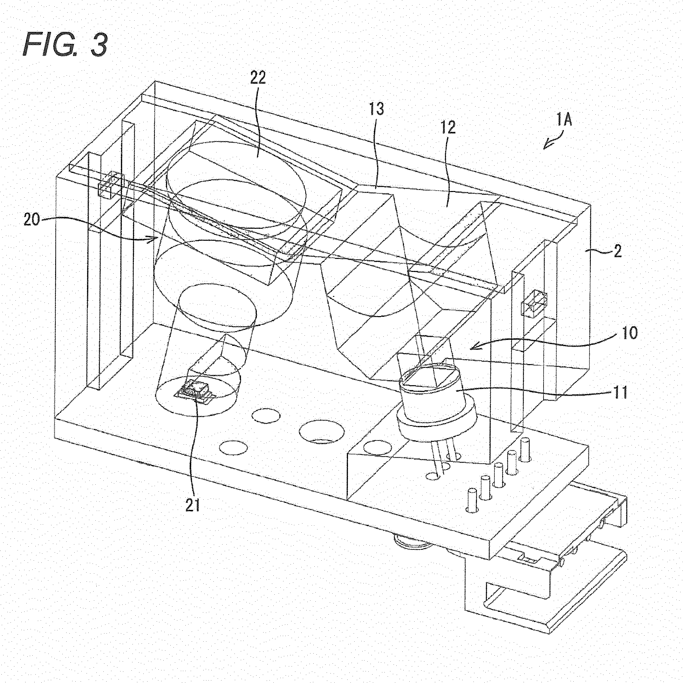

A configuration of a limited reflection type photoelectric sensor 1A according to the present embodiment will be described based on Fig. 3. Fig. 3 is a perspective view illustrating a configuration of the limited reflection type photoelectric sensor 1A according to the present embodiment.

As illustrated in Fig. 3, the limited reflection type photoelectric sensor 1A according to the present embodiment includes a light projecting unit 10 and a light receiving unit 20. The light projecting unit 10 and the light receiving unit 20 are housed in a casing 2.

The light projecting unit 10 includes a laser diode 11 serving as a light emitting element, a light projecting lens 12 which is a convex lens and provided in front of the laser diode 11, and a diffracting grating 13.

The light receiving unit 20 includes a photodiode 21 serving as a light receiving element, and a light receiving lens 22 which is a convex lens and provided in front of the photodiode 21. Note that the light projecting lens 12 and the light receiving lens 22 may be not given in the present invention.

A casing opening 2a is formed in front of the light projecting lens 12 and the light receiving lens 22 so as to allow a projected light beam and a receiving light beam to pass therethrough.

An intersecting angle between an optical axis of the projected light beam and an optical axis of the receiving light beam is set such that the projected light beam from the light projecting unit 10 is directed to the object detection limited area S and the receiving light beam which is reflected light from an object existing in the object detection limited area S is received by the light receiving unit 20. The limited reflection type photoelectric sensor 1A determines presence/absence of the object based on a light receiving level of the photodiode 21.

The limited reflection type photoelectric sensor 1A according to the present embodiment has, in an optical path of the projected light beam from the light projecting unit 10, the diffracting grating 13 serving as a beam separating member that separates the projected light beam into beams oriented in a plurality of directions. Although the beam separating member is realized by the diffracting grating 13 in the present embodiment, the beam separating member to be used in the present invention may be realized by any other member as long as it can separate the projected light beam into beams oriented in a plurality of directions.

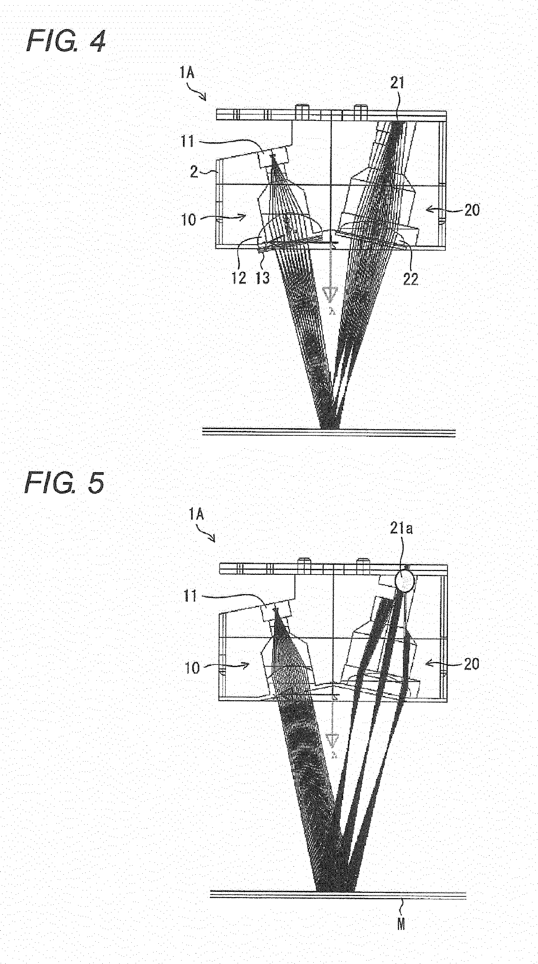

An object detection method for the limited reflection type photoelectric sensor 1A having the above configuration to detect presence/absence of an object will be described based on Figs. 1A to 1C and Fig. 4. Figs. 1A to 1C are cross-sectional views each illustrating the limited reflection type photoelectric sensor and respectively illustrating object detection statuses in different object detection limited areas. Fig. 4 is a cross-sectional view illustrating a configuration of the limited reflection type photoelectric sensor.

As illustrated in FIG. 4, the limited reflection type photoelectric sensor 1A according to the present embodiment has, in the optical path of the projected light beam from the laser diode 11 of the light projecting unit 10, the diffracting grating 13 serving as a beam separating member that separates the projected light beam into beams oriented in a plurality of directions. Thus, a single light beam projected from the laser diode 11 is separated by the diffracting grating 13 into beams oriented in a plurality of directions: zero-order light beam, ± first-order light beams, ± second-order light beams, ± third-order light beams, ····. This allows generation of a plurality of types of beams different in the intersecting angle between the optical axis of the projected light beam and the optical axis of the receiving light beam. Theoretically, the diffracting grating 13 can emit the ± third- and subsequent order light beams; however, in practice, light intensities of the ± third and subsequent order light beams are extremely reduced. Thus, five beams: zero-order light beam, ± first-order light beams, and ± second-order light beams can be practically used and, it is preferable to use, in terms of accuracy, three separated beams: zero-order light beam and ± first-order light beams.

This means that three object detection limited areas S are generated in a direction opposite to the object. That is, as illustrated in Fig. 1B, with the zero-order light beam that has passed through the diffracting grating 13, it is possible to detect an object M in the same object detection limited area S1 as in the case where the diffracting grating 13 is not provided. On the other hand, as illustrated in Figs. 1A and 1C, with the ± first-order light beams that have passed through the diffracting grating 13, it is possible to detect the object M in object detection limited areas S2 and S3, respectively.

As a result, the object detection limited area S is extended to a range including the object detection limited area S2, the object detection limited area S1, and the object detection limited area S3. That is, a detection range is extended.

In the present embodiment, the object M regularly reflects the incident projected light beam. As a result, a specular object can be detected. Although the object M regularly reflects the incident projected light beam in the present embodiment, but is not limited to this, it may be an object that diffusely reflects the incident projected light beam in the present invention. That is, even when the object M is a diffuse reflection object, the photodiode 21 can receive any of the diffusely reflected light beams, so that the object M can be detected.

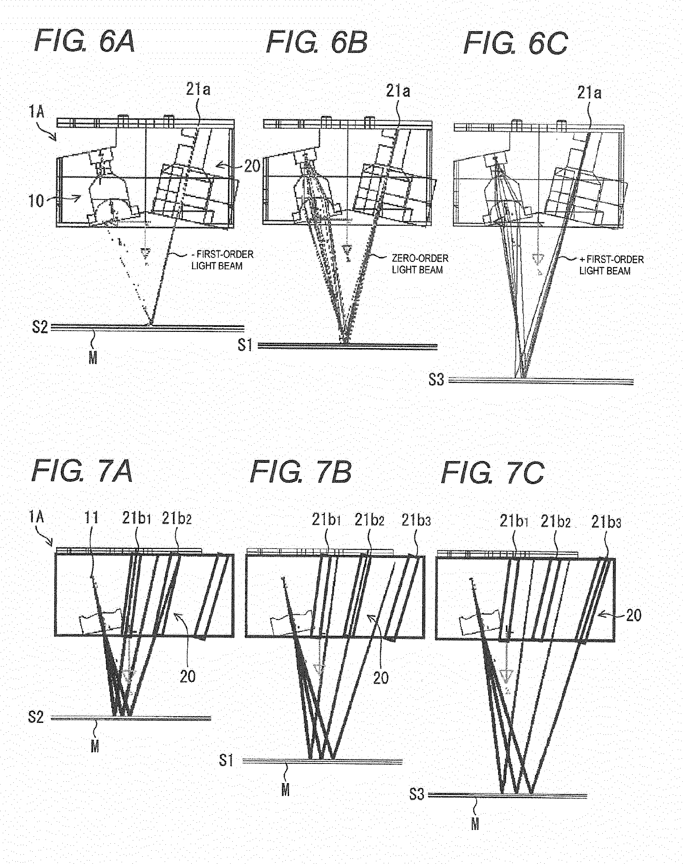

Further, in the present embodiment, various types of the photodiode 21 of the light receiving unit 20 can be used. Examples of the various types will be described based on Fig. 5, Figs. 6A to 6C, and Figs. 7A to 7C. Fig. 5 is, in the limited reflection type photoelectric sensor, a cross-sectional view illustrating the light receiving unit having one light receiving element. Figs. 6A to 6C are, in the limited reflection type photoelectric sensor, cross-sectional views illustrating optical paths of the projected light beam and receiving light beam in a case where an object in different object detection limited areas is detected by one light receiving element. Figs. 7A to 7C are, in the limited reflection type photoelectric sensor, cross-sectional views illustrating optical paths of the projected light beam and receiving light beam in a case where the light receiving unit has a plurality of light receiving elements.

For example, as illustrated in Fig. 5, the photodiode 21 can be designed as a photodiode 21a serving as a multiple beam receiving unit that receives a plurality of receiving light beams obtained as a result of reflection, by the object M, of the projected light beams oriented in a plurality of directions, which are obtained as a result of beam separation by the diffracting grating 13. That is, only one light receiving element suffices.

Thus, as illustrated in Fig. 6A, the - first-order light beam emitted from the diffracting grating 13 existing in the object detection limited area S2 closest to the limited reflection type photoelectric sensor 1A can be received by the photodiode 21 a. Further, as illustrated in Fig. 6B, the zero-order light beam emitted from the diffracting grating 13 existing in the object detection limited area S1 can be received by the photodiode 21 a located at the same position. Further, as illustrated in Fig. 6C, the + first-order light beam emitted from the diffracting grating 13 existing in the object detection limited area S3 farthest from the limited reflection type photoelectric sensor 1A can be received by the photodiode 21 a located at the same position.

On the other hand, for example, regarding the photodiode 21, as illustrated in Figs. 7A to 7C, the light receiving unit 20 may have at least three photodiodes 21b₁, 21b₂, and 21b₃, each serving as a single-beam receiving unit, that receive respective receiving light beams obtained as a result of reflection, by the object M, of the projected light beams oriented in at least three directions, which are obtained as a result of beam separation by the beam separating member.

Thus, as illustrated in Fig. 7A, the - first-order light beam emitted from the diffracting grating 13 existing in the object detection limited area S2 closest to the limited reflection type photoelectric sensor 1A can be received by the photodiode 21b₁. Further, as illustrated in Fig. 7B, the zero-order light beam emitted from the diffracting grating 13 existing in the object detection limited area S1 can be received by the photodiode 21b₂ located at the same position. Further, as illustrated in Fig. 7C, the + first-order light beam emitted from the diffracting grating 13 existing in the object detection limited area S3 farthest from the limited reflection type photoelectric sensor 1A can be received by the photodiode 21b₃ located at the same position.

As a result, when a signal is detected at the photodiode 21b₁, it can be determined that the object M exists in the object detection limited area S2 closest to the limited reflection type photoelectric sensor 1A; when a signal is detected at the photodiode 21b₂, it can be determined that the object M exists in the object detection limited area S1; and when a signal is detected at the photodiode 21b₃, it can be determined that the object M exists in the object detection limited area S3 farthest to the limited reflection type photoelectric sensor 1A. Thus, the limited reflection type photoelectric sensor 1A can be used as a displacement sensor.

In the limited reflection type photoelectric sensor 1A according to the present embodiment, the light projecting lens 12 which is realized by a convex lens that collects the projected light beam can be disposed between the laser diode 11 as the light emitting element and the diffracting grating 13 as the beam separating member.

That is, disposing the light projecting lens 12 realized by the convex lens between the laser diode 11 and the diffracting grating 13 can make a light intensity distribution steep. This allows a threshold for determining presence/absence of the object M to be easily set.

Effects obtained by disposing the light projecting lens 12 realized by the convex lens, and the diffracting grating 13 will be described based on Fig. 8.

Fig. 8 is a graph illustrating a distribution of a detection signal of the light receiving element in each of the following configurations: a collection type in which a convex lens is disposed in the optical path of the projected light beam; a parallel type in which the convex lens is not disposed in the optical path; a diffusion type in which a concave lens is disposed in the optical path; and the limited reflection type photoelectric sensor provided with the diffracting grating according to the present embodiment.

In general, as illustrated in FIG. 8, a distribution of a detection signal in the photodiode 21 assumes a Gaussian distribution, and the distribution is preferably steep for the signal detection. Because the steep distribution facilitates setting of a threshold for position detection. Adopting the light projecting lens 12 realized by the convex lens (plotted as collection type in Fig. 8) produces steep rise of the signal, thereby advantageously facilitating setting of a threshold for position detection. Further, a signal detection peak is steeper in the case where the light projecting lens 12 realized by the convex lens is used and in the limited reflection type photoelectric sensor 1A provided with the diffracting grating 13 according to the present embodiment than in the cases where the light projecting lens 12 realized by the convex lens is not used (plotted as the parallel type in FIG. 8) and where a concave lens is used (plotted as the diffusion type in FIG. 8). Further, the detection range is wider in the limited reflection type photoelectric sensor 1A according to the present embodiment provided with the diffracting grating 13 than the collection type in which only the light projecting lens 12 realized by the convex lens is used and diffusion type in which a concave lens is used.

Next, a detection allowable range of the object detection limited area S of the object in the limited reflection type photoelectric sensor 1 A according to the present embodiment will be described based on Fig. 9. Fig. 9 is a graph illustrating an allowable range of an object detection position as an angular variation in a distribution of the detection signal of the light receiving element in each of the following configurations: a collection type in which the convex lens is disposed in the optical path of the projected light beam; a parallel type in which the convex lens is not disposed in the optical path; a diffusion type in which the concave lens is disposed in the optical path; and the limited reflection type photoelectric sensor provided with the diffracting grating according to the present embodiment.

When an allowable range of the detection position of the object detection limited area S of the object M in the limited reflection type photoelectric sensor 1A according to the present embodiment is represented as an angular variation in a distribution of the detection signal of the light receiving element, the graph of FIG. 9 is obtained.

As is clear from Fig. 9, when an allowable range of the detection position of the object detection limited area S of the object M is analyzed as an angular variation in a distribution of the detection signal of the light receiving element, the allowable range in the limited reflection type photoelectric sensor 1A provided with the diffracting grating 13 according to the present embodiment is better (wider) than those in the parallel type in which the convex lens is not disposed and diffusion type in which the concave lens is disposed. That is, as for angular characteristics, a signal output level decreases as an absolute value of the angle increases in the parallel type in which the convex lens is not disposed and diffusion type in which the concave lens is disposed. On the other hand, in the limited reflection type photoelectric sensor 1A provided with the diffracting grating 13 according to the present embodiment, the decrease in the signal output level associated with the increase in the absolute value of the angle is slow. This indicates that a range of the object detection limited area S is extended as compared to the parallel type in which the convex lens is not disposed and diffusion type in which the concave lens is disposed. Thus, it can be understood that the detection range is wider in the limited reflection type photoelectric sensor 1 A provided with the diffracting grating 13 according to the present embodiment than the parallel type in which the convex lens is not disposed and diffusion type in which the concave lens is disposed. The angular characteristics of the collection type in which the convex lens is disposed in the optical path of the projected light beam are substantially equivalent to the angular characteristic of the limited reflection type photoelectric sensor 1A provided with the diffracting grating 13 according to the present embodiment.

For further functional enhancement, for example, a position of the object detection limited area S can be varied in the limited reflection type photoelectric sensor 1A according to the present embodiment.

That is, in order to allow a variation in the position of the object detection limited area S, the limited reflection type photoelectric sensor 1A according to the present embodiment is provided with an intersecting angle varying mechanism that varies the intersecting angle between the optical axis of the projected light beam and the optical axis of the receiving light beam. The use of the intersecting angle varying mechanism allows the intersecting angle between the optical axis of the projected light beam and the optical axis of the receiving light beam to be varied. As a result, the detection range can be extended, thereby allowing the object M, a distance from which to a surface to be measured significantly varies to be detected with accuracy.

Specifically, in order to allow a variation in the intersecting angle between the optical axis of the projected light beam and the optical axis of the receiving light beam, the intersecting angle varying mechanism can be realized as an inclination angle varying mechanism that varies an inclination angle of at least one of the light projecting unit 10 and light receiving unit 20.

That is, the inclination angle varying mechanism is used to vary the intersecting angle between the optical axis of the projected light beam and the optical axis of the receiving light beam. Specifically, the inclination angle of at least one of the light projecting unit 10 and light receiving unit 20 is varied. For example, a configuration in which the light projecting unit 10 is mounted to a side surface of the casing 2 so as to be rotatable about a not illustrated axis and to be fixed at an arbitrary position may be adopted as the inclination angle varying mechanism. According to this mechanism, the intersecting angle can significantly be varied. This can facilitate adjustment of a distance of the object detection limited area S relative to the limited reflection type photoelectric sensor 1 A.

As described above, the limited reflection type photoelectric sensor 1 A according to the present embodiment includes the light projecting unit 10 having the laser diode 11 and light receiving unit 20 having the photodiode 21, and in the light projecting unit 10 and the light receiving unit 20, the intersecting angle between the optical axis of the projected light beam and the optical axis of the receiving light beam is set such that the projected light beam from the light projecting unit 10 is directed to the object detection limited area S and the receiving light beam which is reflected light from the object M existing in the object detection limited area S is received by the light receiving unit 20. The limited reflection type photoelectric sensor 1 A determines presence/absence of the object M based on a light receiving level of the photodiode 21. Further, the limited reflection type photoelectric sensor 1A has, in the optical path of the projected light beam from the laser diode 11, the beam separating member that separates the projected light beam into beams oriented in a plurality of directions.

As a result, the projected light beam is separated into beams oriented in a plurality of directions. This allows generation of a plurality of types of beams different in the intersecting angle between the optical axis of the projected light beam and the optical axis of the receiving light beam. This means that a plurality of types of the object detection limited areas (S1, S2, S3) are generated in a direction opposite to the object M. Therefore, the detection range is extended. In order to extend the detection range, this configuration can be achieved by simply adding the beam separating member.

Thus, by extending the detection range, it is possible to provide the limited reflection type photoelectric sensor 1A capable of detecting the object M, a distance from which to the surface to be measured varies, with accuracy, in a simple configuration.

Further, in the limited reflection type photoelectric sensor 1A according to the present embodiment, the beam separating member is realized by the diffracting grating 13. When the diffracting grating 13 is irradiated with the projected light beam, the zero-order light beam, ± first-order light beam, ··· are emitted from the diffracting grating 13. That is, the projected light beam is separated into beams oriented in a plurality of directions. The diffracting grating 13 is easily commercially available. Therefore, the beam separating member can be easily realized by the diffracting grating 13 having a simple configuration.

Further, in the limited reflection type photoelectric sensor 1A according to the present embodiment, the light receiving unit 20 has the photodiode 21 a serving as a multiple beam receiving unit that receives a plurality of light beams obtained as a result of reflection, by the object M, of the projected light beams oriented in a plurality of directions, which are obtained as a result of beam separation by the beam separating member.

Accordingly, a plurality of light beams can be received by the photodiode 21 a as a multiple beam receiving unit, so that the number of components constituting the light receiving unit 20 can be reduced.

Further, in the limited reflection type photoelectric sensor 1A according to the present embodiment, the light receiving unit 20 may have at least the three photodiodes 21b₁, 21b₂, and 21b₃, each serving as a single-beam receiving unit, that receive respective receiving light beams obtained as a result of reflection, by the object, of the projected light beams oriented in at least three directions, which are obtained as a result of beam separation by the beam separating member.

Thus, the limited reflection type photoelectric sensor 1A can be used as a displacement sensor for detecting the position of the object.

Further, in the limited reflection type photoelectric sensor 1A according to the present embodiment, the light projecting lens 12 which is realized by the convex lens that collects the projected light beam can be disposed between the laser diode 11 and the beam separating member.

That is, by disposing the light projecting lens 12 which is realized by the convex lens between the laser diode 11 and the beam separating member, the light intensity distribution can be made steep. This allows a threshold for determining presence/absence of the object M to be easily set.

Further, the limited reflection type photoelectric sensor 1A according to the present embodiment can be provided with the intersecting angle varying mechanism that varies the intersecting angle between the optical axis of the projected light beam and the optical axis of the receiving light beam. The use of the intersecting angle varying mechanism allows the intersecting angle between the optical axis of the projected light beam and the optical axis of the receiving light beam to be varied. As a result, the detection range can be extended, thereby allowing the object, a distance from which to the surface to be measured significantly varies to be detected with accuracy.

Further, the limited reflection type photoelectric sensor 1A according to the present embodiment can be provided with the intersecting angle varying mechanism that varies the intersecting angle between the optical axis of the projected light beam and the optical axis of the receiving light beam.

The use of the intersecting angle varying mechanism allows the intersecting angle between the optical axis of the projected light beam and the optical axis of the receiving light beam to be varied. As a result, the detection range can be extended, thereby allowing the object, a distance from which to the surface to be measured significantly varies to be detected with accuracy.

Further, in the limited reflection type photoelectric sensor 1A according to the present embodiment, in order to allow a variation in the intersecting angle between the optical axis of the projected light beam and the optical axis of the receiving light beam, the intersecting angle varying mechanism can be realized as the inclination angle varying mechanism that varies the inclination angle of at least one of the light projecting unit 10 and light receiving unit 20.

Accordingly, the inclination angle varying mechanism is used to vary the intersecting angle between the optical axis of the projected light beam and the optical axis of the receiving light beam. Specifically, the inclination angle of at least one of the light projecting unit 10 and light receiving unit 20 is varied. Thus, the intersecting angle can significantly be varied. This can facilitate adjustment of a distance of the object detection limited area S relative to the limited reflection type photoelectric sensor 1A.

### [Second Embodiment]

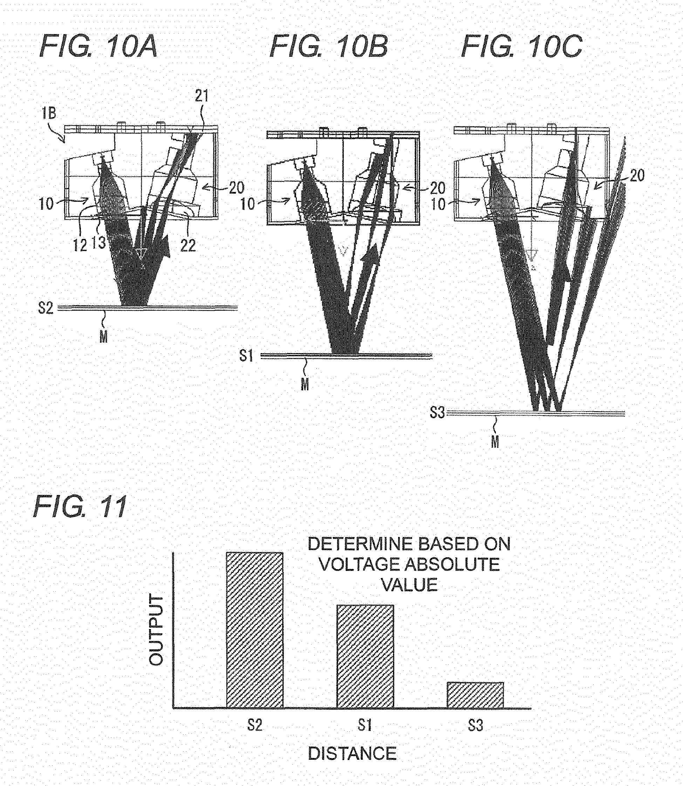

Another embodiment of the present invention will be described based on Figs. 10 to 12. Note that configurations other than those described in the present embodiment are the same as those of first embodiment. Further, for descriptive convenience, the members having the same functions as those illustrated in the first embodiment are designated by the same reference numerals, and their descriptions will not be given.

The limited reflection type photoelectric sensor 1A of the first embodiment aims to detect the presence/absence of the object M in the object detection limited area S, and the object M may be the regular reflection object or the diffuse reflection object.

On the other hand, in a limited reflection type photoelectric sensor 1 B according to the present embodiment, the object M needs to be the regular reflection object. As a result, the limited reflection type photoelectric sensor 1 B according to the present embodiment can grasp not only the presence/absence of the object M, but also a distance variation of the object M.

That is, since the regular reflection object M is used, the limited reflection type photoelectric sensor 1 B according to the present embodiment can detect the object M existing in the object detection limited areas S1, S2, and S3 by using the photodiode 21 as illustrated in Figs. 10A, 10B, and 10C. In this case, as illustrated in Fig. 11, the smaller the distance between the object detection limited area S and the limited reflection type photoelectric sensor 1 B, the higher an output level of the photodiode 21 becomes (i.e., S2>S1>S3). Thus, by correlating the output level with the respective distances from the object detection limited areas S1, S2, and S3, it is possible to easily grasp the distance between the object M and limited reflection type photoelectric sensor 1 B.

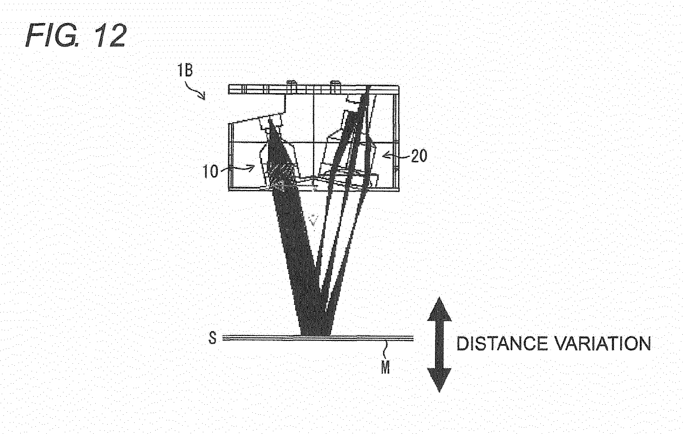

As illustrated in Fig. 12, when the object M travels in a front-rear direction, it is possible to grasp whether the object M recedes from or approaches the limited reflection type photoelectric sensor 1 B depending on whether the output level changes high to low or low to high.

Specifically, when the output level of the photodiode 21 changes from high to low, it can be determined that the object M recedes from the limited reflection type photoelectric sensor 1 B, while when the output level of the photodiode 21 changes from low to high, it can be determined that the object M approaches the limited reflection type photoelectric sensor 1 B.

By measuring a time required for the object M to travel in the front-rear direction, a travel speed of the object M can be easily calculated.

As described above, in the limited reflection type photoelectric sensor 1 B according to the present embodiment, the light receiving unit 20 can receive the receiving light beam from the object M that regularly reflects the projected light beam incident thereto.

This allows detection of the specular object, so that it is possible not only to confirm the presence/absence of the object M but also to grasp information concerning movement of the object M.

Further, the limited reflection type photoelectric sensor 1 B according to the present embodiment can be provided with an inter-object distance calculating unit that calculates a distance from the object M based on the magnitude of the light receiving level of the photodiode 21.

That is, the use of the inter-object distance calculating unit allows the calculation of the distance between the limited reflection type photoelectric sensor 1 B and the object M.

Further, the limited reflection type photoelectric sensor 1 B according to the present embodiment can be provided with an object travel direction detecting unit that detects whether the object M approaches or recedes therefrom depending on whether the light receiving level of the photodiode 21 changes from high to low or low to high.

Accordingly, the use of the object travel direction detecting unit allows the detection of whether the object M approaches or recedes therefrom depending on whether the light receiving level of the photodiode 21 changes from high to low or low to high.

Further, the limited reflection type photoelectric sensor 1 B according to the present embodiment can be provided with a travel speed calculating unit that calculates an approaching speed or a receding speed of the object M based on a temporal change in the light receiving level of the photodiode 21.

Accordingly, the use of the travel speed calculating unit allows calculation of the approaching speed or receding speed of the object M based on a temporal change in the light receiving level of the photodiode 21.

The present invention is not limited to each of the above-described embodiments, and various modifications are possible within the range described in the claims. An embodiment obtained by appropriately combining technical means disclosed in each of the different embodiments is included in the technical scope of the present invention.

The present invention can be applied to a limited reflection type photoelectric sensor having a limited object detection area. Specifically, the present invention is used for detection of presence/absence of an object in a limited range, such as detection of a level difference in an object or detection of presence/absence of a piece of paper. Further, the present invention can be used for grasping travel information of an object in the object detection limited area.

## Claims

1. A limited reflection type photoelectric sensor comprising:
a light projecting unit comprising a light emitting element;
a light receiving unit comprising a light receiving element; and
a beam separating member configured to separate a projected light beam into beams oriented in a plurality of directions and located in an optical path of the projected light beam from the light emitting element, wherein
the light projecting unit and the light receiving unit is configured to meet the condition that an intersecting angle between an optical axis of a projected light beam and an optical axis of a receiving light beam is set such that the projected light beam from the light projecting unit is directed to an object detection limited area and the receiving light beam which is reflected light by an object existing in the object detection limited area is received by the light receiving unit, and
presence/absence of the object is determined based on a light receiving level of the light receiving element.

2. The limited reflection type photoelectric sensor according to claim 1, wherein
the beam separating member is a diffracting grating.

3. The limited reflection type photoelectric sensor according to claim 1 or 2, wherein
the light receiving unit comprises a multiple beam receiving unit configured to receive a plurality of receiving light beams obtained as a result of reflection, by the object, of the projected light beams oriented in a plurality of directions, which are obtained as a result of beam separation by the beam separating member.

4. The limited reflection type photoelectric sensor according to claim 1 or 2, wherein
the light receiving unit comprises at least three single-beam receiving unit configured to receive respective receiving light beams obtained as a result of reflection, by the object, of the projected light beams oriented in at least three directions, which are obtained as a result of beam separation by the beam separating member.

5. The limited reflection type photoelectric sensor according to any one of claims 1 to 4, further comprising a convex lens configured to collect the projected light beam, which is located between the light emitting element and the beam separating member.

6. The limited reflection type photoelectric sensor according to any one of claims 1 to 5, further comprising: an intersecting angle varying mechanism configured to vary an intersecting angle between the optical axis of the projected light beam and the optical axis of the receiving light beam.

7. The limited reflection type photoelectric sensor according to claim 6, wherein
the intersecting angle varying mechanism is an inclination angle varying mechanism configured to vary an inclination angle of at least one of the light projecting unit and the light receiving unit so as to allow a variation in the intersecting angle between the optical axis of the projected light beam and the optical axis of the receiving light beam.

8. The limited reflection type photoelectric sensor according to any one of claims 1 to 7, wherein
the light receiving unit is configured to receive the receiving light beam reflected by an object that regularly reflects the projected light beam incident thereto.

9. The limited reflection type photoelectric sensor according to claim 8, further comprising an inter-object distance calculating unit configured to calculate a distance from the object based on a magnitude of a light receiving level of the light receiving element.

10. The limited reflection type photoelectric sensor according to claim 9 further comprising an object travel direction detecting unit configured to detect whether the object approaches or recedes therefrom depending on whether the light receiving level of the light receiving element changes from high to low or low to high.

11. The limited reflection type photoelectric sensor according to 10, further comprising a travel speed calculating unit configured to calculate an approaching speed or a receding speed of the object based on a temporal change in the light receiving level of the light receiving element.
